# EUROPÄISCHE PATENTSCHRIFT

(11) **EP 3 165 066 B1**
(45) Veröffentlichungstag und Bekanntmachung des Hinweises auf die Patenterteilung: **20.12.2023**
(21) Anmeldenummer: 16401079.5
(22) Anmeldetag: 02.11.2016
(51) Int. Cl.: A01C 17/00

(54) **VERFAHREN ZUM BESTIMMEN EINES STREUBILDS EINES SCHLEUDERSTREUERS**
METHOD FOR DETERMINING A DISTRIBUTION PATTERN OF A CENTRIGUAL SPREADER
PROCÉDÉ DE DÉTERMINATION D'UN DIAGRAMME DE DISPERSION D'UN ÉPANDEUR CENTRIFUGE

(30) Priorität: 06.11.2015 DE 102015119071
(43) Veröffentlichungstag der Anmeldung: 10.05.2017
(73) Patentinhaber: Amazonen-Werke H. Dreyer SE & Co. KG, 49205 Hasbergen (DE)
(72) Erfinder: Scheufler, Bernd, 49205 Hasbergen (DE); Rahe, Florian, 49504 Lotte (DE)

(56) Entgegenhaltungen:
- EP-A1- 2 923 546
- DE-A1-102004 017 075

## Beschreibung

Die Erfindung betrifft ein Verfahren zum Bestimmen eines Streubilds eines Schleuderstreuers gemäß dem Oberbegriff des Anspruchs 1 und wie bekannt aus EP 2 923 546 A1.

Beim Ausstreuen von Dünger ist die Verteilung der Düngerkörner in einer Richtung quer zur Fahrtrichtung eines Schleuderstreuers an die gewünschte Arbeitsbreite anzupassen. Das Fließverhalten und das Flugverhalten der Düngerkörner hängen hierbei unter anderem von der Korngröße, Kornform, Reindichte, Schüttdichte und Kornfestigkeit ab. Für unterschiedliche Schleuderstreuer lassen sich hierbei die empfohlenen Einstellwerte unter Berücksichtigung der jeweiligen Düngersorte aus Datenbanken abrufen. Obwohl sich die Arbeitsbreite des Schleuderstreuers damit prinzipiell auf geeignete Weise einstellen lässt, lassen sich Abweichungen von den erwarteten Verteilungen der Düngerkörner quer zur Fahrtrichtung des Schleuderstreuers nicht immer vermeiden. Grund hierfür sind in erster Linie Veränderungen der Düngerqualität, beispielsweise bei Änderungen der Luftfeuchte, oder unzureichende Daten für bestimmte Düngersorten. Die tatsächliche Verteilung der Düngerkörner quer zur Fahrtrichtung des Schleuderstreuers muss dann in der praktischen Anwendung überprüft werden.

Zu diesem Zweck ist aus der DE 10 2004 017 075 A1 beispielsweise eine Auffangschale bekannt, bei der eine Auffangfläche für Düngerkörner durch sogenannte Antispritzverlustgitter rasterförmig unterteilt ist. Die Auffangschale ist auf diese Weise in eine Vielzahl von Teilschalen unterteilt, in denen Düngerkörner aufgefangen und gesammelt werden. Die derart gesammelten Fraktionen werden dann ausgewogen. Dieses Vorgehen ist allerdings vergleichsweise umständlich und zeitaufwendig.

Als Alternative schlägt die DE 103 27 129 A1 ein Bild gebendes Verfahren vor, bei dem ein Fahrzeug mit einer darauf installierten Kamera quer zu den Fahrspuren eines Düngerstreuers über die ausgestreuten Düngerkörner gefahren wird. Hierbei werden mehrere Kamerabilder der bestreuten Ackerfläche aufgenommen und die Verteilung der abgebildeten Düngerkörner ermittelt. Dies erfordert jedoch ein separates Fahrzeug mit einem speziellen Kamerasystem.

Es besteht somit der Bedarf für ein demgegenüber vereinfachtes Verfahren zum Bestimmen eines Streubilds quer zur Fahrtrichtung eines Schleuderstreuers.

Die gestellte Aufgabe wird mit einem Verfahren nach Anspruch 1 gelöst. Demnach eignet sich dieses zum Bestimmen eines Streubilds eines Schleuderstreuers, wobei mehrere Auffangschalen quer zur Fahrtrichtung des Schleuderstreuers ausgelegt werden, wobei ein von dem Schleuderstreuer erzeugter Streufächer in Fahrtrichtung über die Auffangschalen bewegt wird, und wobei die von den Auffangschalen jeweils aufgefangenen Düngermengen ermittelt werden. Erfindungsgemäß werden die Positionen der Auffangschalen mittels GPS-Ortung gemessen und relativ zur Position des Schleuderstreuers ermittelt.

Ein exaktes Ausrichten der Auffangschalen in vorgegebenen Abständen quer zur Fahrtrichtung ist dann entbehrlich. Dadurch lässt sich das Streubild mit ausreichender Genauigkeit und mit geringem Arbeitsaufwand auf einem Feld oder einer anderweitig dafür geeigneten Fläche ermitteln.

Vorzugsweise werden die Positionen durch Positionieren eines Smartphone mit GPS-System oder einer Kamera mit GPS-System im Bereich der Auffangschalen, insbesondere auf oder über den Auffangschalen, gemessen. Derartige Geräte sind problemlos in den Bereich der Auffangschalen zu transportieren und weisen zudem standardisierte Schnittstellen zur Übertragung von Positionsdaten an Bordcomputer oder dergleichen und/oder Auswertefunktionen zum Verarbeiten der Positionsdaten auf. Die ermittelten Positionen können somit auf einfache Weise verwaltet und für die Berechnung des Streubilds verwendet werden.

Vorzugsweise werden die Positionen beim Ausleeren der Auffangschalen gemessen. Beide Arbeitsschritte können dann von einem Anwender auf einfache Weise kombiniert werden.

Vorzugsweise werden die Positionen beim digitalen Abbilden der Auffangschalen gemessen. Die Auffangschalen werden beispielsweise mittels eines Smartphone oder einer Kamera mit GPS-System fotografiert, um die aufgefangene Düngermenge zu dokumentieren und/oder zu ermitteln. Die Auffangschalen werden dann insbesondere von einer Position über den Auffangschalen abgebildet, so dass die vom GPS-System beim Abbilden ermittelte Position für die Berechnung des Streubilds direkt übernommen werden kann.

Vorzugsweise werden die aufgefangenen Düngermengen durch Wiegen ermittelt. Beispielsweise können die Auffangschalen nach dem Ermitteln ihrer Position mit einer transportablen Waage gewogen werden. Die gewogenen Düngermengen können an eine Auswerteeinheit, beispielsweise an ein Smartphone mit GPS-System oder einen Bordcomputer zum Ansteuern des Schleuderstreuers drahtlos übertragen werden.

Vorzugsweise werden die aufgefangenen Düngermengen durch digitales Abbilden der Auffangschalen und Berechnung der Bedeckung der Auffangschalen mit Dünger ermittelt. Zu diesem Zweck sind die Auffangschalen vorzugsweise derart dimensioniert, dass der aufgefangene Dünger in den Auffangschalen nur eine einzige Lage von Düngerkörnern ausbildet. Durch Vergleich von mit Dünger bedecktem und nicht mit Dünger bedecktem Anteil der Auffangschalen und unter Berücksichtigung der bekannten Größe der Auffangschalen kann die aufgefangene Düngermenge absolut bestimmt werden. Für die Ermittlung des Streubilds kann es aber ausreichend sein, die Bedeckung nur als Relativwert der Düngermenge zu ermitteln, insbesondere falls alle verwendeten Auffangschalen dieselbe Größe haben. Ein Auswiegen der aufgefangenen Düngermengen ist bei einer derartigen Bildauswertung der Bedeckung in den Auffangschalen entbehrlich.

Vorzugsweise werden beim digitalen Abbilden der Auffangschalen ferner die Aufnahmepositionen mittels GPS gemessen. Dadurch ist eine eindeutige Zuordnung der abgebildeten Auffangschalen und ihrer jeweiligen Position gewährleistet. Zudem wird bei einer Abbildung aus einer Aufnahmeposition über den Auffangschalen eine zusätzliche Ortsbestimmung der Auffangschalen mittels GPS beim Entleeren der Auffangschalen oder dergleichen entbehrlich.

Erfindungsgemäß wird aus den ermittelten Düngermengen und den gemessenen Positionen der Auffangschalen eine Verteilung des Düngers quer zur Fahrtrichtung berechnet. Durch Zuordnung der gemessenen Düngermengen zu den gemessenen Positionen der Auffangschalen lässt sich die Querverteilung mit vergleichsweise großer Genauigkeit, auch bei vergleichsweise uneinheitlichen Abständen zwischen den Auffangschalen, ermitteln.

Vorzugsweise werden die Auffangschalen wenigstens bis zur Hälfte einer vorgegebenen Arbeitsbreite ausgelegt, insbesondere an wenigstens vier unterschiedlichen Positionen quer zur Fahrtrichtung. Damit lässt sich ein vergleichsweise einfacher Streuversuch durchführen. Die Arbeitsbreite ist für ein normales Befahren abstandsgleicher innerer Feldfahrgassen ausgelegt.

Vorzugsweise werden die Auffangschalen über eine vorgegebene Arbeitsbreite ausgelegt, insbesondere an wenigstens sechs unterschiedlichen Positionen quer zur Fahrtrichtung. Dadurch lässt sich ein besonders aussagekräftiger Streuversuch durchführen. Die Arbeitsbreite ist hierbei für das Anschlussfahren entlang abstandsgleicher innerer Feldfahrgassen ausgelegt.

Vorzugsweise werden an den Positionen, insbesondere an jeder Position, wenigstens zwei Auffangschalen in Fahrtrichtung hintereinander ausgelegt. Dadurch kann die Genauigkeit eines Streuversuchs erhöht werden, ohne die Anzahl der Positionen quer zur Fahrtrichtung erhöhen zu müssen. Es lässt sich somit ein vergleichsweise genauer Streuversuch mit geringem Arbeitsaufwand durchführen.

Vorzugsweise wird für die Abstände zwischen den Auffangschalen quer zur Fahrtrichtung eine Abweichung von +/- 50% von einem vorgegebenen mittleren Abstand zwischen den Auffangschalen zugelassen, insbesondere eine Abweichung von +/- 20%. Die tatsächlichen Positionen der Auffangschalen müssen von einem Anwender daher nur grob abgeschätzt werden. Durch die Bestimmung der tatsächlichen Positionen mittels GPS verringern Abweichungen in den obigen Toleranzbereichen die erforderliche Genauigkeit von Streuversuchen nicht nennenswert.

Vorzugsweise werden die Positionen der Auffangschalen relativ zueinander ermittelt. Aufgrund dieser Maßnahme können mit herkömmlichen GPS-Systemen, wie sie beispielsweise in Smartphones und/oder Fotokameras integriert sind, Streubilder mit ausreichender Genauigkeit ermittelt werden.

Vorzugsweise wird wenigstens eine der Auffangschalen an einer vorgegebenen Referenzposition in/an einer von dem Schleuderstreuer beim Bestreuen der Auffangschalen befahrenen Fahrgasse ausgelegt. Dadurch kann das ermittelte Streubild in einen korrekten räumlichen Bezug zu einer befahrenen Fahrgasse gebracht werden. Anders gesagt, muss nur an der Referenzposition für eine exakte Positionierung bezüglich der Fahrspur gesorgt werden und die Position der Auffangschale mittels GPS gemessen werden. Für alle anderen Auffangschalen genügt eine relative Positionsbestimmung mittels GPS bezogen auf die Referenzposition.

Eine bevorzugte Ausführungsform der Erfindung ist in den Zeichnungen dargestellt. Es zeigen:
- Fig. 1: eine schematische Draufsicht auf einen Streuversuch zur Ermittlung des Streubilds;
- Fig. 2: eine schematische Draufsicht auf einen vereinfachten Streuversuch; und
- Fig. 3: eine mit dem Verfahren ermittelte Querverteilung im Vergleich.

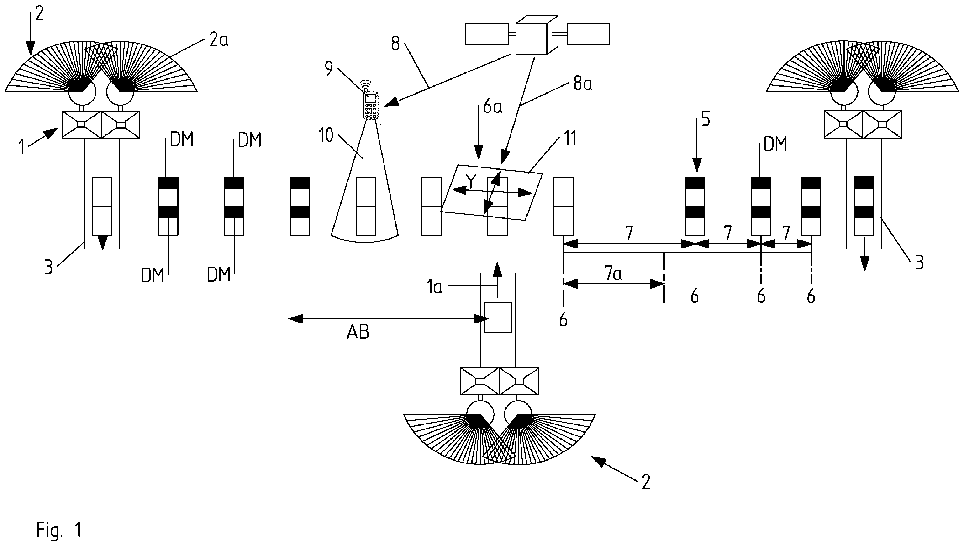

Wie die Fig. 1 zeigt schematisch einen erfindungsgemäßen Streuversuch, bei dem hinter einem Schleuderstreuer 1 mit schematisch angedeuteten Schleuderscheiben Dünger 2 in Form eines Streufächers 2a abgeworfen wird. Der Schleudererstreuer 1 befährt im normalen Streubetrieb innere Feldfahrgassen 3 eines Felds in abwechselnd gegenläufiger Fahrtrichtung 1a. Die Feldfahrgassen 3 verlaufen geradlinig in einem einheitlichen Abstand zueinander entsprechend einer vorgegebenen Arbeitsbreite AB.

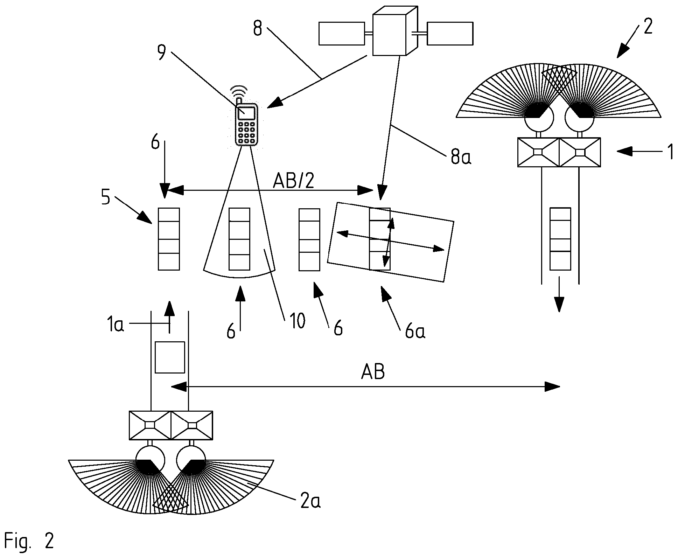

Zum Ermitteln eines für den Schleuderstreuer 1 und den Dünger 3 charakteristischen Streubilds 4 (siehe Fig. 2) orthogonal zur Fahrtrichtung 1a werden mehrere Auffangschalen 5 zwischen den benachbarten Feldfahrgassen 3 an Positionen 6 in unregelmäßigen Abständen 7 voneinander quer zur Fahrtrichtung 1a ausgelegt, so dass im Wesentlichen die gesamte Arbeitsbreite AB von den Auffangschalen 5 erfasst wird.

Die Abstände 7 ergeben sich beispielsweise aus einem vorgegebenen Raster, das jedoch nur mit einer bestimmten Toleranz eingehalten werden muss. Vielmehr können die Auffangschalen 5 ausgehend von einem solchen Raster durch individuelle Abschätzung der Positionen 6 auf einfache Weise ausgelegt werden.

Die tatsächlichen Positionen 6 der Auffangschalen 5 werden durch GPS-Ortung 8 mit einem Smartphone 9, einer digitalen Kamera mit GPS-Funktion oder einem anderweitig mobilen GPS-System ermittelt.

Wie die Fig. 1 verdeutlicht, können die Auffangschalen 5 jeweils paarweise in Fahrtrichtung 1a hintereinander an je einer Position 6 quer zur Fahrtrichtung 1a ausgelegt werden, um die Genauigkeit der Messung zu erhöhen. Es wäre auch denkbar, noch mehr Auffangschalen 5 in dieser Weise in Fahrtrichtung 1a hintereinander zu positionieren.

Vorzugsweise wird eine von den Auffangschalen 5 jeweils aufgefangene Düngermenge DM durch digitales Abbilden 10 mittels Smartphone 9 oder digitaler Kamera ermittelt. Zu diesem Zweck wird das Smartphone 9 oder die digitale Kamera vorzugsweise über den Auffangschalen 5 positioniert, so dass die Aufnahmeposition des Smartphone 9 oder der digitalen Kamera näherungsweise der tatsächlichen Position 6 der abgebildeten Auffangschale 5 entspricht.

Alternativ ist es auch denkbar, das Smartphone 9 oder eine digitale Kamera mit GPS-Funktion in einem separaten Arbeitsschritt über die Auffangschale 5 zu halten oder auf diese zu legen, um die tatsächliche Position 6 der Auffangschale 5 ohne deren gleichzeitige digitale Abbildung zu messen. Dies wäre beispielsweise dann vorteilhaft, wenn die aufgefangene Düngermenge DM anderweitig, beispielsweise durch Auswiegen der bestreuten Auffangschalen 5, ermittelt wird. Die zugehörige GPS-Ortung 8 der tatsächlichen Position 6 könnte dann unmittelbar vor dem Auswiegen und/oder Entleeren der Auffangschalen 5 durchgeführt werden.

In der Fig. 1 ist eine absolute GPS-Ortung 8a für eine im Bereich einer befahrenen Feldfahrgasse 3 positionierte Auffangschale 5 schematisch angedeutet. Dies liefert einen absoluten Bezugspunkt 6a für die weiteren GPS-Ortungen 8 des Streuversuchs. Diese können dann relativ dazu erfolgen beispielsweise bezüglich eines kartesischen Koordinatensystems 11, das vorzugsweise mit seiner x-Achse in oder entgegen der Fahrtrichtung 1a und mit seiner y-Achse seitlich orthogonal dazu ausgerichtet ist. Streubilder 4 werden dann vorzugseise als Querverteilung 12 der absoluten oder relativen Düngermenge DM entlang dieser y-Achse angegeben. Die Positionen 6, 6a sind demzufolge in Querrichtung, also bezüglich der y-Achse definiert.

Somit muss lediglich die als Bezugspunkt 6a dienende Auffangschale 5 exakt bezüglich der befahrenen Feldfahrgasse 3 positioniert werden. Dadurch, dass die tatsächlichen Positionen 6 der übrigen Auffangschalen 5 dann lediglich in Relation zum Bezugspunkt 6a gemessen werden müssen, ist die Genauigkeit herkömmlicher GPS-Systeme, wie sie in Smartphones oder digitalen Kameras verbaut werden, ausreichend für die Ermittlung der Querverteilung 12 des Düngers 2 bzw. des zugehörigen Streubilds 4 des Schleuderstreuers 1.

Die aufgefangene Düngermenge DM ist in der Fig. 1 als teilweise Bedeckung der Auffangschalen 5 dargestellt. Vorzugsweise sind die Auffangschalen 5 derart dimensioniert, dass der aufgefangene Dünger 2 in den Auffangschalen 5 eine einlagige Kornschicht ausbildet. Dies ermöglicht eine einfache Messung der Düngermenge DM durch Vergleich des bedeckten Flächenanteils der Auffangschalen 5 mit dem unbedeckten Flächenanteil.

Für die Berechnung absoluter Düngermengen DM wäre dann lediglich noch zu berücksichtigen, wie groß die von einer bestimmten Düngermenge DM der verwendeten Düngersorte- oder charge bedeckte Fläche ist. Das Verfahren lässt sich jedoch prinzipiell mit Relativwerten durchführen, also lediglich durch Messung und Vergleich der in den einzelnen Auffangschalen 5 von Dünger 2 bedeckten Flächenanteile.

Die Fig. 2 verdeutlicht einen vereinfachten Streuversuch, bei dem die Auffangschalen 5 lediglich über einen Bereich entsprechend der halben Arbeitsbreite AB/2 quer zur Fahrtrichtung 1a ausgelegt werden. Um die Genauigkeit dieser Messung zu verbessern, werden beispielsweise je vier Auffangschalen 5 in Fahrtrichtung 1a hintereinander an je einer der tatsächlichen Positionen 6 der Auffangschalen beziehungsweise am Bezugspunkt 6a ausgelegt.

Demnach muss der Bezugspunkt 6a für die weiteren GPS-Ortungen des Streuversuchs nicht zwangsläufig auf einer der Fahrspuren 3 liegen. Allerdings sind Auffangschalen 5a im Bereich der Fahrspur 3 exakt zu positionieren, so dass für die anderen GPS-Ortungen 8 ein korrekter Rückbezug zu der tatsächlichen Position 6 auf der Fahrspur 3 hergestellt werden kann. Ansonsten können sämtliche Arbeitsschritte entsprechend dem Streuversuch der Fig. 1 ausgeführt werden.

Die GPS-Ortung 8 der Auffangschalen 5 kann generell separat von einer digitalen Abbildung 10 der Auffangschalen 5 erfolgen. Beispielsweise wird das Smartphone 9 für die GPS-Ortung 8 der tatsächlichen Positionen 6 vorübergehend über, auf oder in den Auffangschalen 5 positioniert. Bei einer anschließenden digitalen Abbildung 10 der Auffangschalen 5 aus beliebiger Aufnahmeposition neben den Auffangschalen 5 wird dann zusätzlich eine GPS-Ortung 8 des dafür verwendeten Smartphone 9 oder einer entsprechenden digitalen Kamera mit GPS-Funktion vorgenommen. Durch Vergleich dieser beiden GPS-Ortungen 8 lassen sich die abgebildeten Auffangschalen 5 exakt ihrer tatsächlichen Position 6 zuordnen.

Beispielsweise können zuerst alle Auffangschalen 5 nacheinander digital abgebildet werden und dabei die jeweilige Aufnahmeposition mittels GPS-Ortung am verwendeten Smartphone 9 oder an der entsprechenden digitalen Kamera ermittelt werden. Anschließend können die tatsächlichen Positionen 6 der Auffangschalen 5 beispielsweise bei deren Entleerung gemessen werden.

Entscheidend ist hierbei, dass die tatsächlichen Positionen 6 der einzelnen Auffangschalen 5 mittels GPS-Ortung 8 gemessen werden. Dadurch müssen die Auffangschalen 5 nicht exakt in einem vorgegebenen Messraster quer zur Fahrtrichtung 1a ausgelegt werden. Beispielsweise wird eine Abweichung von +/- 50% oder insbesondere von +/- 20% der tatsächlichen Positionen 6 von einem derartigen Messraster zugelassen, beispielsweise von einem vorgegebenen mittleren Abstand 7a zwischen den Auffangschalen 5. Das heißt, ein Anwender muss die Auffangschalen 5 lediglich mit vergleichsweise geringer Genauigkeit in Anlehnung an ein vorgegebenes Messraster quer zur Fahrtrichtung 1a auslegen. Die GPS-Ortung 8 ermöglicht eine ausreichend genaue Überprüfung der erzeugten Querverteilung 12 trotz derartiger Toleranzen beim Auslegen der Auffangschalen 5.

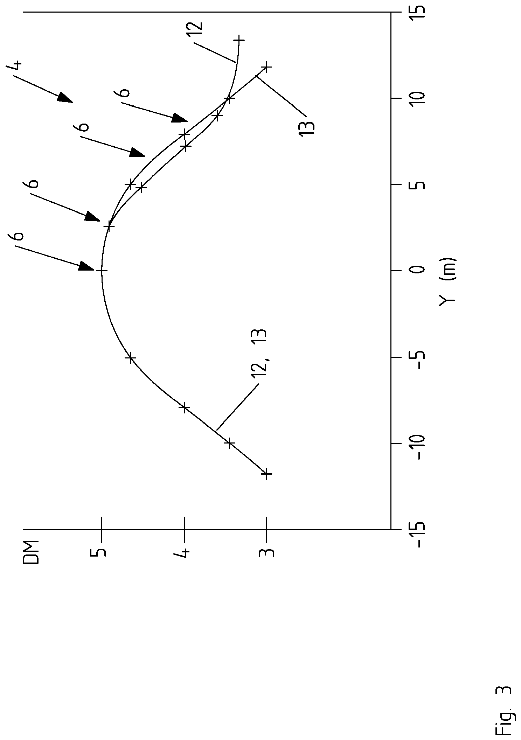

Die Fig. 3 verdeutlicht dies anhand eines Streubilds 4 des Schleuderstreuers mit zwei auf unterschiedliche Weise ermittelten Querverteilungen 12, 13 der Düngermenge DM. Die Querverteilung 12 der Düngermenge wurde in Anlehnung an die Fig. 1 unter GPS-Ortung 8 der tatsächlichen Positionen 6 der Auffangschalen 5 ermittelt. Zum Vergleich ist die tatsächliche Querverteilung 13 der Düngermenge DM dargestellt, die man erhält, indem eine lückenlose Reihe von Auffangschalen 5 quer zur Fahrtrichtung 1a unter Idealbedingungen ausgelegt wird. Dieses Vorgehen ist aufgrund des hohen Arbeitsaufwands auf einem Feld kaum praktikabel, eignet sich jedoch als Vergleichsstandard.

Demnach ermöglicht die GPS-Ortung 8 der tatsächlichen Positionen 6 der Auffangschalen 5 trotz ungleichmäßiger Abstände 7 und vergleichsweise geringer Anzahl ausgelegter Auffangschalen 5 eine aussagekräftige Messung von Querverteilungen und Streubildern.

Somit ermöglicht das Verfahren eine verbesserte Genauigkeit und deutlich vereinfachte Handhabung gegenüber herkömmlichen Streuversuchen, bei den Auffangschalen 5 exakt in einem vorgegebenen Messraster ausgelegt werden müssen.

## Patentansprüche

1. Verfahren zum Bestimmen eines Streubilds (4) eines Schleuderstreuers (1), wobei mehrere Auffangschalen (5) quer zur Fahrtrichtung (1a) des Schleuderstreuers (1) ausgelegt werden, wobei ein von dem Schleuderstreuer (1) erzeugter Streufächer (2a) in Fahrtrichtung (1a) über die Auffangschalen (5) bewegt wird, und wobei die von den Auffangschalen (5) jeweils aufgefangenen Düngermengen (DM) ermittelt werden, **dadurch gekennzeichnet, dass** die Positionen (6) der Auffangschalen (5) mittels GPS-Ortung (8) gemessen und relativ zur Position des Schleuderstreuers (1) ermittelt werden, und wobei aus den ermittelten Düngermengen (DM) und Positionen (6) der Auffangschalen (5) eine Verteilung (12) des Düngers (2) quer zur Fahrtrichtung (1a) auch bei uneinheitlichen Abständen zwischen den Auffangschalen berechnet wird.

2. Verfahren nach Anspruch 1, wobei die Positionen (6) durch Positionieren eines Smartphone (5) mit GPS-System oder einer Kamera mit GPS-System im Bereich der Auffangschalen (5), insbesondere in, auf oder über den Auffangschalen (5), gemessen werden.

3. Verfahren nach Anspruch 1 oder 2, wobei die Positionen (6) beim Ausleeren der Auffangschalen (5) gemessen werden.

4. Verfahren nach Anspruch 1 oder 2, wobei die Positionen (6) beim digitalen Abbilden (10) der Auffangschalen (5) gemessen werden.

5. Verfahren nach einem der vorigen Ansprüche, wobei die aufgefangenen Düngermengen (DM) durch Wiegen ermittelt werden.

6. Verfahren nach einem der Ansprüche 1 bis 4, wobei die aufgefangenen Düngermengen (DM) durch digitales Abbilden (10) der Auffangschalen (5) und Berechnung der Bedeckung der Auffangschalen (5) mit Dünger (2) ermittelt werden.

7. Verfahren nach Anspruch 6, wobei der Dünger (2) in den Auffangschalen (5) als einlagige Kornschicht abgebildet wird.

8. Verfahren nach Anspruch 6 oder 7, wobei beim digitalen Abbilden (10) ferner die Aufnahmeposition mittels GPS-Ortung (8) gemessen wird.

9. Verfahren nach wenigstens einem der vorigen Ansprüche, wobei die Auffangschalen (5) wenigstens bis zur Hälfte einer vorgegebenen Arbeitsbreite (AB) ausgelegt werden, insbesondere an wenigstens vier unterschiedlichen Positionen (6) quer zur Fahrtrichtung (1a).

10. Verfahren nach wenigstens einem der vorigen Ansprüche, wobei die Auffangschalen (5) über eine vorgegebene Arbeitsbreite (AB) ausgelegt werden, insbesondere an wenigstens sechs unterschiedlichen Positionen (6) quer zur Fahrtrichtung (1a).

11. Verfahren nach wenigstens einem der vorigen Ansprüche, wobei an den Positionen (6) wenigstens zwei Auffangschalen (5) in Fahrtrichtung (1a) hintereinander ausgelegt werden.

12. Verfahren nach wenigstens einem der vorigen Ansprüche, wobei für die Abstände (7) zwischen den Auffangschalen (6) quer zur Fahrtrichtung eine Abweichung +/- 50% von einem vorgegebenen mittleren Abstand (7a) zugelassen wird, insbesondere eine Abweichung von +/- 20%.

13. Verfahren nach wenigstens einem der vorigen Ansprüche, wobei die Positionen (6) der Auffangschalen (5) relativ zueinander und/oder relativ zu einer von dem Schleuderstreuer (1) beim Bestreuen der Auffangschalen (5) befahrenen Fahrspur (3) ermittelt werden.

14. Verfahren nach wenigstens einem der vorigen Ansprüche, wobei wenigstens eine der Auffangschalen (6) an einem vorgegebenen Bezugspunkt (6a) in/an einer von dem Schleuderstreuer (1) beim Bestreuen der Auffangschalen (5) befahrenen Fahrspur (3) ausgelegt wird.

## Claims

1. A method for determining a spreading pattern (4) of a centrifugal spreader (1), wherein a plurality of collection trays (5) are arranged transversely to the direction of travel (1a) of the centrifugal spreader (1), a spreading fan (2a) generated by the centrifugal spreader (1) is moved over the collection trays (5) in the direction of travel (1a), and the fertilizer amounts (DM) collected by each of the collection trays (5) are determined, **characterized in that** the positions (6) of the collection trays (5) are measured by means of GPS positioning (8) and are determined relative to the position of the centrifugal spreader (1), and wherein a distribution (12) of the fertilizer (2) transversely to the direction of travel (1a) is calculated from the determined fertilizer amounts (DM) and positions (6) of the collection trays (5) even in the case of non-uniform distances between the collection trays.

2. The method according to claim 1, wherein the positions (6) are measured by positioning a smartphone (5) having a GPS system or a camera having a GPS system in the region of the collection trays (5), in particular in, on or above the collection trays (5).

3. The method according to either claim 1 or claim 2, wherein the positions (6) are measured when the collection trays (5) are emptied.

4. The method according to either claim 1 or claim 2, wherein the positions (6) are measured during digital imaging (10) of the collection trays (5).

5. The method according to any of the preceding claims, wherein the collected fertilizer amounts (DM) are determined by weighing.

6. The method according to any of claims 1 to 4, wherein the collected fertilizer amounts (DM) are determined by digital imaging (10) of the collection trays (5) and calculation of the coverage of the collection trays (5) with fertilizer (2).

7. The method according to claim 6, wherein the fertilizer (2) is imaged in the collection trays (5) as a single-layer grain layer.

8. The method according to either claim 6 or claim 7, wherein the recording position is also measured by means of GPS location (8) during the digital imaging (10).

9. The method according to at least one of the preceding claims, wherein the collection trays (5) are arranged over at least half a predetermined working width (AB), in particular at at least four different positions (6) transverse to the direction of travel (1a).

10. The method according to at least one of the preceding claims, wherein the collecting trays (5) are arranged over a predetermined working width (AB), in particular at at least six different positions (6) transverse to the direction of travel (1a).

11. The method according to at least one of the preceding claims, wherein at least two collection trays (5) are arranged one behind the other in the direction of travel (1a) at the positions (6).

12. The method according to at least one of the preceding claims, wherein, for the distances (7) between the collection trays (6) transverse to the direction of travel, a deviation of +/- 50% from a predetermined average distance (7a) is permitted, in particular a deviation of +/- 20%.

13. The method according to at least one of the preceding claims, wherein the positions (6) of the collection trays (5) are determined relative to one another and/or relative to a lane (3) traveled by the centrifugal spreader (1) during spreading of the collection trays (5).

14. The method according to at least one of the preceding claims, wherein at least one of the collection trays (6) is arranged at a predetermined reference point (6a) in/on a lane (3) traveled by the centrifugal spreader (1) during spreading of the collection trays (5).

## Revendications

1. Procédé permettant la détermination d'une image d'épandage (4) d'un épandeur centrifuge (1), dans lequel plusieurs bacs de récupération (5) sont disposés transversalement au sens de déplacement (1a) de l'épandeur centrifuge (1), dans lequel une nappe d'épandage (2a) produite par l'épandeur centrifuge (1) est déplacée dans le sens de déplacement (1a) au-dessus des bacs de récupération (5), et dans lequel les quantités d'engrais (DM) respectivement récupérées par les bacs de récupération (5) sont déterminées,
**caractérisé en ce que** les positions (6) des bacs de récupération (5) sont mesurées à l'aide de la localisation GPS (8) et déterminées par rapport à la position de l'épandeur centrifuge (1), et dans lequel, à partir des quantités d'engrais (DM) et des positions (6) des bacs de récupération (5) déterminées, une distribution (12) de l'engrais (2) transversalement au sens de déplacement (1a) est également calculée pour des distances irrégulières entre les bacs de récupération.

2. Procédé selon la revendication 1, dans lequel les positions (6) sont mesurées par positionnement d'un mobile multifonction (5) comportant un système GPS ou d'une caméra comportant un système GPS dans la zone des bacs de récupération (5), en particulier dans, sur ou au-dessus des bacs de récupération (5).

3. Procédé selon la revendication 1 ou 2, dans lequel les positions (6) sont mesurées lors du vidage des bacs de récupération (5).

4. Procédé selon la revendication 1 ou 2, dans lequel les positions (6) sont mesurées lors de la représentation numérique (10) des bacs de récupération (5).

5. Procédé selon l'une des revendications précédentes, dans lequel les quantités d'engrais (DM) récupérées sont déterminées par pesage.

6. Procédé selon l'une des revendications 1 à 4, dans lequel les quantités d'engrais (DM) récupérées sont déterminées par représentation numérique (10) des bacs de récupération (5) et par calcul de la surface que les bacs de récupération (5) couvrent avec de l'engrais (2).

7. Procédé selon la revendication 6, dans lequel l'engrais (2) dans les bacs de récupération (5) est représenté sous forme de couche de grains simple.

8. Procédé selon la revendication 6 ou 7, dans lequel, lors de la représentation numérique (10), la position de réception est en outre mesurée à l'aide de la localisation GPS (8).

9. Procédé selon au moins l'une des revendications précédentes, dans lequel les bacs de récupération (5) sont disposés au moins jusqu'à la moitié d'une largeur de travail (AB) prédéfinie, en particulier à au moins quatre positions (6) différentes transversales au sens de déplacement (1a).

10. Procédé selon au moins l'une des revendications précédentes, dans lequel les bacs de récupération (5) sont disposés sur une largeur de travail (AB) prédéfinie, en particulier à au moins six positions (6) différentes transversales au sens de déplacement (1a).

11. Procédé selon au moins l'une des revendications précédentes, dans lequel au moins deux bacs de récupération (5) sont disposés successivement dans le sens de déplacement (1a) aux positions (6).

12. Procédé selon au moins l'une des revendications précédentes, dans lequel, pour les distances (7) entre les bacs de récupération (6) transversaux au sens de déplacement, un écart de +/- 50 % par rapport à une distance (7a) moyenne prédéfinie est admis, en particulier un écart de +/- 20 %.

13. Procédé selon au moins l'une des revendications précédentes, dans lequel les positions (6) des bacs de récupération (5) sont déterminées les unes par rapport aux autres et/ou par rapport à une voie (3) parcourue par l'épandeur centrifuge (1) lors de l'épandage des bacs de récupération (5).

14. Procédé selon au moins l'une des revendications précédentes, dans lequel au moins l'un des bacs de récupération (6) est disposé à un point de référence (6a) prédéfini dans/sur une voie (3) parcourue par l'épandeur centrifuge (1) lors de l'épandage des bacs de récupération (5).
